# EUROPEAN PATENT APPLICATION

(11) **EP 4 340 086 A1**
(43) Date of publication of application: **20.03.2024**
(21) Application number: 23197230.8
(22) Date of filing: 13.09.2023
(51) Int. Cl.: H01M 10/04

(54) **SECONDARY BATTERY MANUFACTURING SYSTEM HAVING A MULTI-PACKAGING UNIT**

(30) Priority: 15.09.2022 KR 20220116440
(71) Applicant: SK On Co., Ltd., Seoul 03161 (KR); Toptec Co., Ltd., Gumi-si Gyeongsangbuk-do 39158 (KR)
(72) Inventor: SHIN, Yong Uk, 17917 Pyeongtaek-si (KR); CHO, Sang Sik, 31487 Asan-si (KR); NAM, Dae Woon, 17867 Pyeongtaek-si (KR); PARK, Dong Jin, 31409 Asan-si (KR); CHOI, Jae Gyun, 31037 Cheonan-si (KR); AN, Chi Hong, 31409 Asan-si (KR)
(74) Representative: Prüfer & Partner mbB Patentanwälte · Rechtsanwälte

(57) **Abstract**

The present disclosure relates to a secondary battery manufacturing system having a multi-packaging unit, in which multiple packaging units of a secondary battery manufacturing facility are provided and a transfer box on which an electrode assembly is accommodated is transferred to each packaging unit by a transfer unit, wherein the secondary battery manufacturing system includes: an electrode supply unit equipped with a plurality of stacking devices for supplying an electrode assembly in which a plurality of battery cells are stacked; a tab-welding unit; at least one packaging unit; at least one temporary buffer; and a transfer unit.

## Description

### TECHNICAL FIELD

The present disclosure relates to a secondary battery manufacturing system, having a multi-packaging unit.

### BACKGROUND

Generally, a secondary battery is a battery that may be used repeatedly through a discharging process of converting chemical energy into electrical energy and a charging process of converting electrical energy into chemical energy.

Examples of the secondary battery may include a nickel-cadmium (Ni-Cd) battery, a nickel-hydrogen (Ni-MH) battery, a lithium-metal battery, a lithium-ion (Li-Ion) battery, and a lithium-ion polymer battery.

Among the secondary batteries, a lithium secondary battery may have a cycle life of about 500 times or more and a short charging time of about 1 hour to about 2 hours, and may be lightened because of being about 30% to 40% lighter than the nickel-hydrogen battery, and among the existing secondary batteries, the lithium secondary battery may have the highest voltage (30 to 37 V) per unit cell and have excellent energy density, thereby having a characteristic optimized for mobile devices.

Such a lithium secondary battery is manufactured as a pouch type secondary battery in which an electrode assembly in which a plurality of battery cells (e.g., jelly roll type electrodes) are stacked is sealed together with an electrolyte in a pouch made of an aluminum encapsulant.

In this case, electrode tabs of the electrode assembly accommodated in the pouch are electrically connected to lead tabs drawn out of the pouch, and the lead tabs are protected by an insulating film.

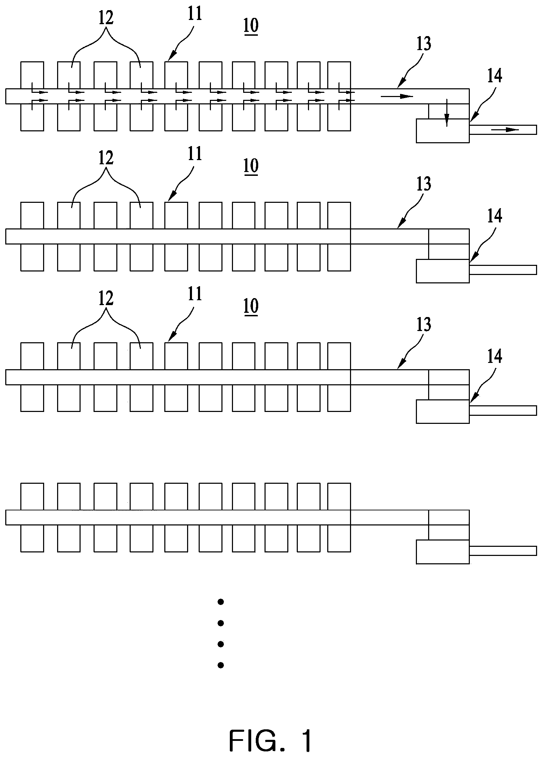

As illustrated in FIG. 1, the pouch type secondary batteries are individually manufactured through each of lines of a plurality of secondary battery manufacturing facilities 10.

The secondary battery manufacturing facility 10 includes an electrode supply unit 11 equipped with a plurality of stacking devices 12 for supplying an electrode assembly in which battery cells are stacked, a tab-welding unit 13 in which a plurality of positive electrodes and negative electrodes exposed from the electrode assembly are welded with a bundle, respectively, while receiving the electrode assembly, and + and - electrode tabs are connected to the positive electrodes and the negative electrodes as welded with a bundle, respectively, and a packaging unit 14 in which the electrode assembly that have been welded is inserted into an aluminum pouch and an electrolyte is injected thereinto.

However, since the secondary battery manufacturing facility uses an In-Line manner of manufacturing in which the electrode supply unit, the tab-welding unit, and the packaging unit are sequentially arranged to manufacture a secondary battery by passing through each unit, there may be the following problems.

Since component replacement and equipment supply of the tab-welding unit and the packaging unit are usually performed twice a day, an operation of the secondary battery manufacturing facility must also be stopped during that period, and thus manufacturing productivity of the secondary battery may be seriously degraded.

Specifically, in the case of the tab-welding unit, cleaning and setting operations along with replacement of consumable components for welding electrodes must be performed by operators, and in the case of the packaging unit, consumable equipment such as an aluminum pouch and an electrolyte for packaging the electrode assembly must be supplied.

For example, as illustrated in FIG. 1, in the case of replacing the components of the tab-welding unit of a line of a specified secondary battery manufacturing facility among the plurality of secondary battery manufacturing facilities, since the electrode assembly cannot be welded, operations of the electrode supply unit for supplying the electrode assembly and the packaging unit for pouch packaging is inevitably stopped, and the secondary battery manufacturing facility line has no choice but to stop. Conversely, when the equipment of the packaging unit is replaced, since pouch packaging of the electrode assembly cannot be performed, the secondary battery manufacturing facility line has no choice but to stop.

Since the time for stopping the manufacturing facility of the secondary battery is generally about 1.5 to 2 hours according to the requirements, there may be a problem in that the secondary battery cannot be manufactured at the same time period.

### SUMMARY

An aspect of the present disclosure is devised to solve the above problems and technical biases, and is meant to provide a secondary battery manufacturing system having a multi-packaging unit that allows the electrode assembly to be continuously discharged or supplied, by applying a Multi-Line manner of manufacturing rather than an In-line manner of manufacturing to secondary battery manufacturing facilities, even if a tab-welding unit or a packaging unit is stopped.

In some embodiments of the present disclosure a secondary battery manufacturing system having a multi-packaging unit, wherein the secondary battery manufacturing system includes: an electrode supply unit equipped with a plurality of stacking devices for supplying an electrode assembly in which a plurality of battery cells are stacked; a tab-welding unit disposed adjacently to the electrode supply unit, and configured to weld the electrode tab exposed from the electrode assembly with a bundle and connect an electrode lead to settle the electrode assembly in a transfer box; at least one packaging unit spaced apart from the tab-welding unit and configured to receive the transfer box from the tab-welding unit to insert the electrode assembly into an aluminum pouch; at least one temporary buffer disposed adjacently to the tab-welding unit and in which the transfer box is temporarily loaded when the packaging unit stops operating; and a transfer unit disposed between the tab-welding unit and the packaging unit in an arrangement direction of the secondary battery manufacturing facilities, and configured to selectively transfer the transfer box of the tab-welding unit or the temporary buffer to a plurality of packaging units under control of a controller, and configured to implement a path for a passage.

In this case, the transfer unit is configured to: pick up the transfer box loaded into the temporary buffer when the tab-welding unit stops operating and supply the transfer box to the packaging unit; and pick up the transfer box discharged from the tab-welding unit when the packaging unit stops operating and load the transfer box in the temporary buffer, or supply the transfer box to another non-stopping packaging unit.

Furthermore, the transfer unit may include: a dedicated rail spaced apart from a ground and disposed between the tab-welding unit and the packaging unit in the arrangement direction of the secondary battery manufacturing facilities; at least one transfer member interconnected to the tab-welding units, the temporary buffers and the packaging units through wired and wireless control and configured to transfer the transfer box of the tab-welding unit or the temporary buffer to a selected packaging unit while moving along the dedicated rail; and a bridge unit disposed between each secondary battery manufacturing facility on the dedicated rail and configured to implement a path for an operator's passage below the dedicated rail by ascending and descending.

Furthermore, the bridge unit may include: an elevating panel equipped with an elevating rail along which the transfer member moves; a plurality of elevating lifts configured to support the elevating panel and including an elevating boss therein; and a fixed lift including an accommodating body configured to accommodate the elevating lift therein, an elevating shaft penetrating through the elevating boss by spiral coupling, and a driving motor configured to rotate the elevating shaft, so that the elevating lift ascends or descends by raising or lowering the elevating boss by the rotation of the elevating shaft.

Furthermore, a plurality of secondary battery manufacturing facilities may be disposed in a parallel direction.

Furthermore, in the transfer box, a plurality of settling plates on which the electrode assembly may be settled are disposed to be spaced apart from each other in a vertical direction, and the transfer box may be provided with a flow prevention unit for preventing movements by pressing the electrode assembly settled on the settling plates.

Meanwhile, the flow prevention unit may include: a fixing pole disposed on both sides of the settling plates and configured to support the settling plates to be raised or lowered; an elevating link in which a plurality of rotating bars rotatably overlapped in the form of an 'X' are disposed adjacently to a pair of fixing poles, wherein one side of each rotating bar is installed in one side end of each setting plate through a rotating pin, and the other side of each rotating bar is installed in the other side end of each settling plate through the rotating pin; and a moving block connected to an end of the rotating bar disposed on a bottom side in a vertical direction through the rotating pin, and configured to separate the settling plates from each other by rotating the rotating bar while moving horizontally by a rotation of a rotating shaft and ascending or descending the settling plates at the same time.

Furthermore, a guide rail is disposed between one side of the rotating bar and an end of the settling plate so as to raise or lower the settling plate when the rotating bar rotates according to a movement of the moving block.

Furthermore, the flow prevention unit may include: a plurality of pressing plates disposed above each settling plate on which the electrode assembly is accommodated, and configured to be raised or lowered toward the settling plate; an elevating support stand disposed on both sides of the pressing plate and configured to support the pressing plates to be raised or lowered; an elastic member configured to connect the pressing plate and the settling plate to be elastically supported by each other so that the pressing plate and the settling plate is formed in a group; and a pushing rod having a predetermined length for separating the settling plates formed in a group, by simultaneously ascending or descending the pressing plates while being connected to each of the pressing plates.

According to a secondary battery manufacturing system having a multi-packaging unit of the present disclosure with the aforementioned configuration, among the secondary battery manufacturing facilities, the packaging unit is disposed in a Multi-Line manner of manufacturing rather than an In-Line manner of manufacturing, there is provided a temporary buffer on which a transfer box having an electrode assembly settled therein is temporarily loaded, and as a transfer box discharged from a tab-welding unit or a transfer box loaded into the temporary buffer is transferred to each packaging unit by a transfer unit, when the tab-welding unit stops, the transfer unit picks up the transfer box of the temporary buffer and supplies the transfer box to each packaging unit, and when the packaging unit stops, the transfer unit picks up the transfer box discharged from the tab-welding unit and loads the transfer box in the temporary buffer, thereby continuously supplying or discharging the electrode assembly to have excellent manufacturing productivity of the secondary battery.

In addition, an operator or equipment may be allowed to pass through a bridge unit during the transfer of the transfer box between the arranged secondary battery manufacturing facilities, thereby ensuring the passage safety of the operator and the equipment.

In addition, since a flow prevention unit prevents a movement of an electrode assembly settled in the transfer box, thereby ensuring the safety of the electrode assembly from impacts or vibrations applied from an external source during the transfer.

### BRIEF DESCRIPTION OF DRAWINGS

Certain aspects, features, and advantages of the present disclosure are illustrated by the following detailed description with reference to the accompanying drawings.
FIG. 1 is a schematic diagram illustrating a conventional secondary battery manufacturing system.
FIG. 2 is a schematic diagram illustrating a secondary battery manufacturing system according to the present disclosure.
FIG. 3 is a side view illustrating a structure of a transfer unit when viewed from direction A of FIG. 2.
FIG. 4 is an essential part cross-sectional view of a bridge unit of the transfer unit of FIG. 3.
FIG. 5 is a perspective view illustrating an embodiment of a flow prevention unit of a transfer box in a configuration of a secondary battery manufacturing system according to the present disclosure.
FIGS. 6 and 7 are operational views illustrating a driving state of FIG. 5.
FIG. 8 is a perspective view illustrating another embodiment of a flow prevention unit of a transfer box in a configuration of a secondary battery manufacturing system according to the present disclosure.
FIGS. 9 and 10 are operational views illustrating a driving state of FIG. 8.

### DETAILED DESCRIPTION

Hereinafter, preferred embodiments of the present disclosure will be described in more detail with reference to the accompanying drawings . The present embodiments are provided to explain the present disclosure in more detail to those skilled in the art to which the present disclosure pertains . Therefore, the shape of each element illustrated in the drawings can be exaggerated to emphasize a clearer description.

It will be understood that, although the terms first, second, etc., may be used herein to describe various elements, these elements should not be limited by these terms. These terms are only used to distinguish one element from another.

The terms used in the present disclosure are used only to describe specific embodiments, and are not intended to limit the present disclosure. In this specification, the singular also includes the plural unless specifically stated otherwise in the phrase. It will be further understood that the terms "comprises," "comprising," "includes" and/or "including", when used herein, specify the presence of stated features, integers, steps, operations, elements, components and/or combinations thereof, but do not preclude the presence or addition of one or more other features, integers, steps, operations, elements, components, and/or groups thereof.

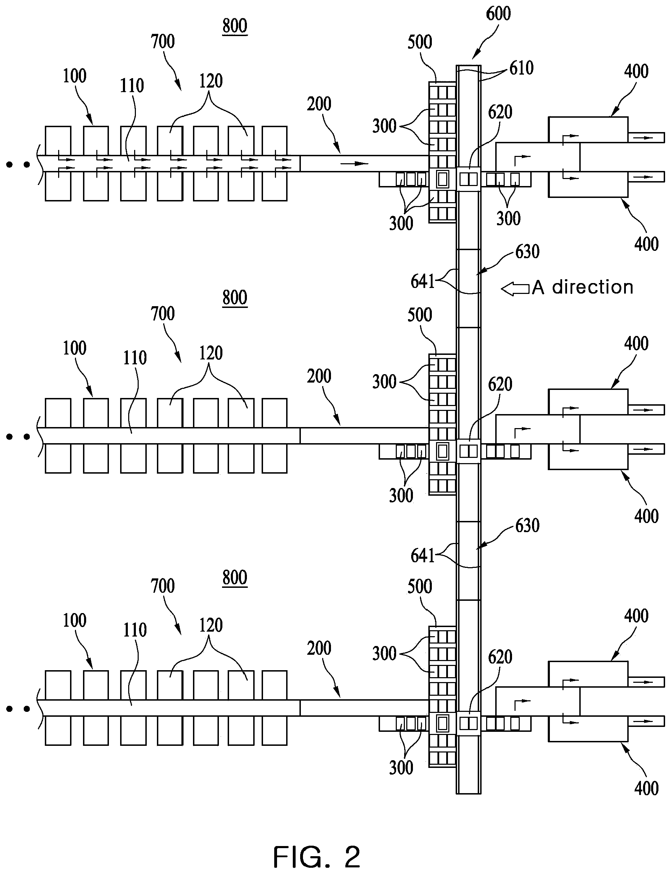

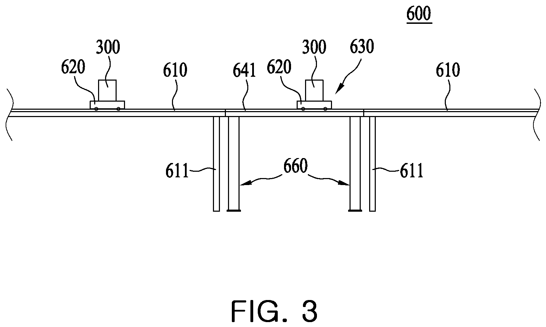

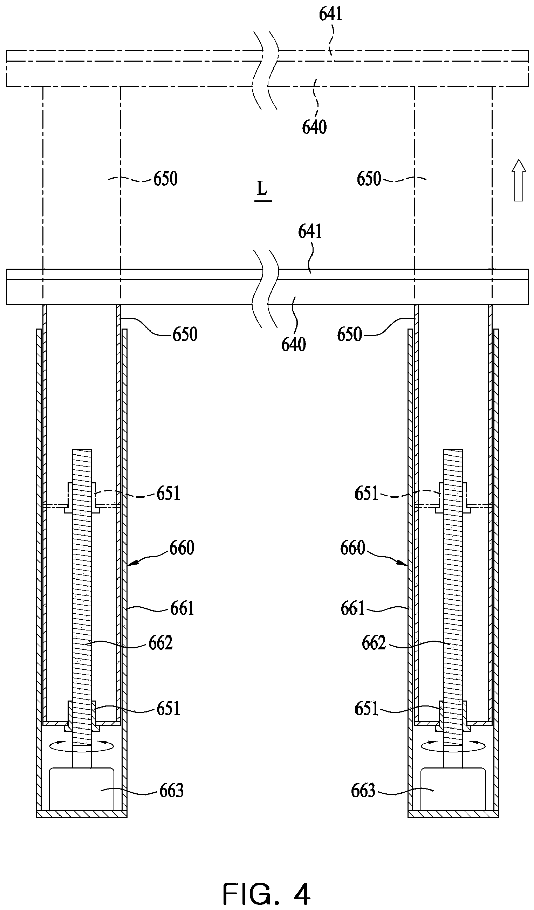

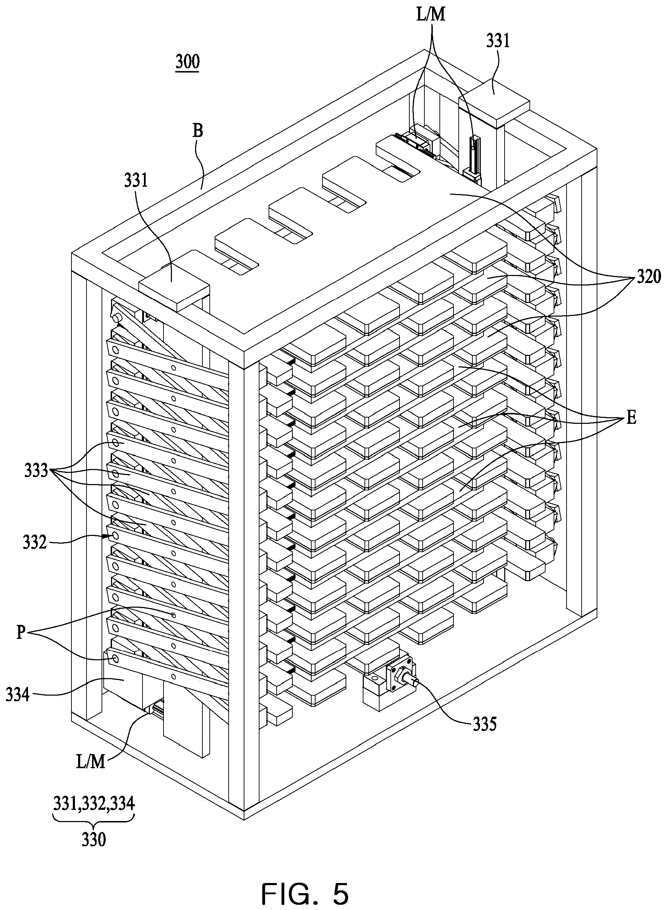

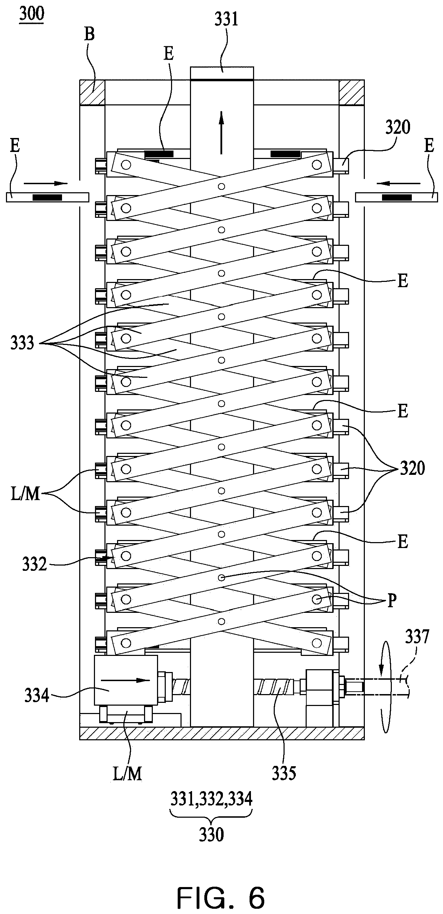

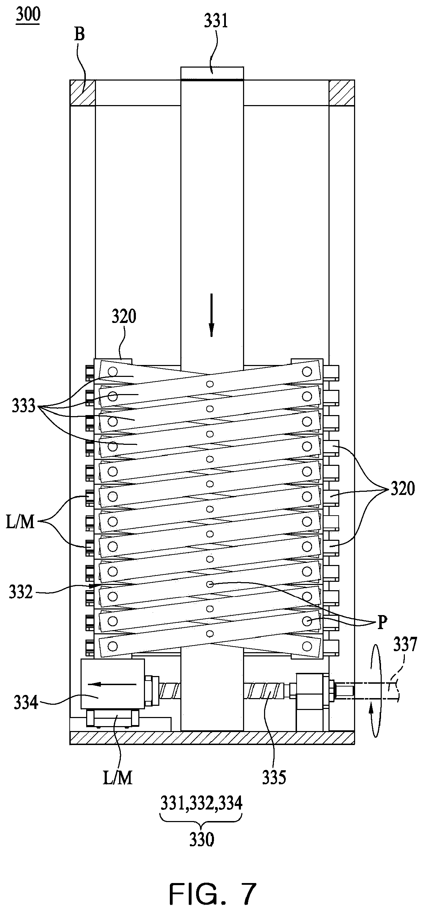

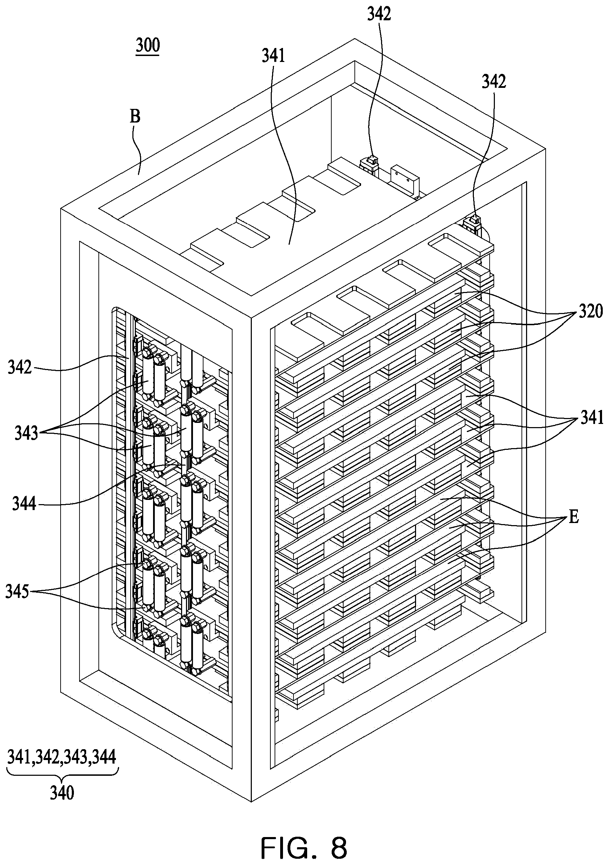

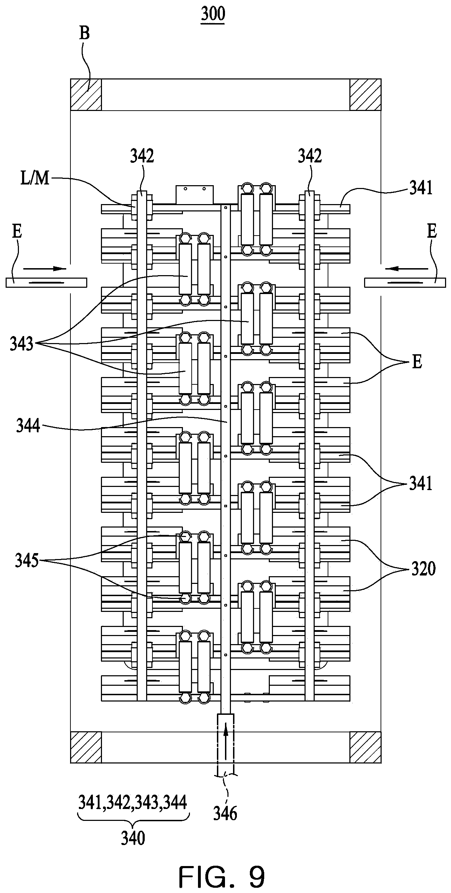

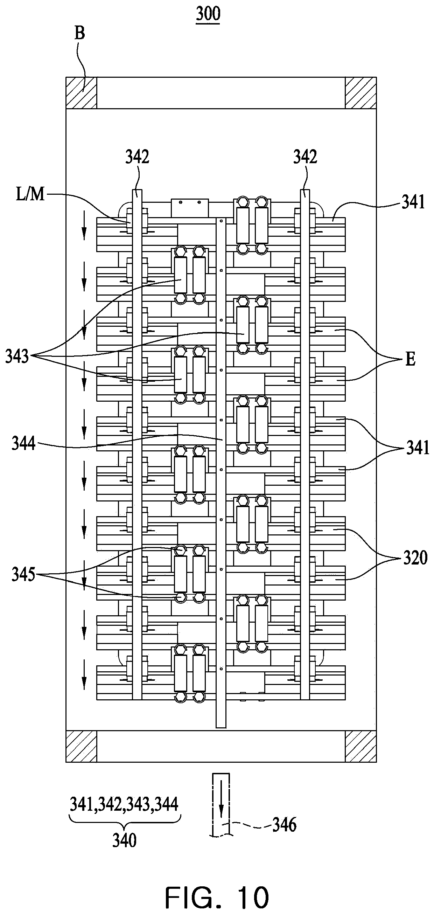

FIG. 2 is a schematic diagram illustrating a secondary battery manufacturing system according to the present disclosure, FIG. 3 is a side view illustrating a structure of a transfer unit when viewed from direction A of FIG. 2, FIG. 4 is an essential part cross-sectional view of a bridge unit of the transfer unit of FIG. 3, FIG. 5 is a perspective view illustrating an embodiment of a flow prevention unit of a transfer box in a configuration of a secondary battery manufacturing system according to the present disclosure, FIGS. 6 and 7 are operational views illustrating a driving state of FIG. 5, FIG. 8 is a perspective view illustrating another embodiment of a flow prevention unit of a transfer box in a configuration of a secondary battery manufacturing system according to the present disclosure, and FIGS. 9 and 10 are operational views illustrating a driving state of FIG. 8.

As illustrated in FIGS. 2 to 7, a secondary battery manufacturing system 800 having a multi-packaging unit of the present disclosure includes: an electrode supply unit 100 equipped with a plurality of stacking devices 120 for supplying an electrode assembly E in which a plurality of battery cells are stacked; a tab-welding unit 200 disposed adjacently to the electrode supply unit 100 and configured to weld the electrode tab exposed from the electrode assembly E with a bundle and connect an electrode lead to settle the electrode assembly E in a transfer box 300; at least one packaging unit 400 spaced apart from the tab-welding unit 200 and configured to receive the transfer box 300 from the tab-welding unit 200 to insert the electrode assembly E into an aluminum pouch; at least one temporary buffer 500 disposed adjacently to the tab-welding unit 200 and in which the transfer box 300 is temporarily loaded when an operation the packaging unit 400 is stopped; and a transfer unit 600 disposed between the tab-welding unit 200 and the packaging unit 400 in an arrangement direction of secondary battery manufacturing facilities 700, and configured to selectively transfer the transfer box 300 of the tab-welding unit 200 or the temporary buffer 500 to a plurality of packaging units 400 under control of a controller and to implement a path for a passage.

As described above, the best feature of the present disclosure is that the packaging unit 400 is disposed in a Multi-Line manner of manufacturing in which a plurality of packaging units 400 are formed for the tab-welding unit 200, and there is a provided a temporary buffer 500 in which a transfer box 300 may be temporarily stored, and accordingly, even if the tab-welding unit 200 or the packaging unit 400 is stopped, temporary storage of the transfer box 300 and supplying of the transfer box 300 to the packaging unit 400 are continuously performed through the transfer unit 600, thereby increasing the manufacturing productivity of a secondary battery.

Furthermore, an operation of each structure described below may be driven under control of a controller not illustrated.

As illustrated in FIG. 2, the secondary battery manufacturing system 800 of the present disclosure includes a plurality of secondary battery manufacturing facilities 700, thus manufacturing a secondary battery through each line of the secondary battery manufacturing facility 700.

In this case, as illustrated, the plurality of secondary battery manufacturing facilities 700 may be disposed in parallel toward the bottom of FIG. 2, so that a transfer unit 600 described below may pick up a transfer box 300 and load the transfer box 300 to a temporary buffer 500 or selectively supply the transfer box 300 to a plurality of packaging units 400.

In an embodiment of the present disclosure, three secondary battery manufacturing facilities 700 are connected in a group by the transfer unit 600 described below, but since the number of secondary battery manufacturing facilities 700 may be at least two, the number thereof is not limited.

As illustrated in FIG. 2, in the secondary battery manufacturing facility 700 of the present disclosure, an electrode supply unit 100 and a tab-welding unit 200 are disposed in an In-Line manner of manufacturing, and two packaging units 400 are disposed for the tab-welding unit 200. in a multi-Line manner of manufacturing.

The secondary battery manufacturing facility 700 of the present disclosure includes an electrode supply unit 100, a tab-welding unit 200, a packaging unit 400, a temporary buffer 500, and a transfer unit 600.

The electrode supply unit 100 serves to supply an electrode assembly E to the tab-welding unit 200 described below, and is comprised of a plurality of stacking devices 120.

As illustrated in FIG. 2, the plurality of stacking devices 120 are disclosed toward the tab-welding unit 200 in a state in which they face each other, and each stacking device 120 discharges an electrode assembly E in which a plurality of battery cells (30 to 50 sheets) are stacked.

In this case, the battery cells stacked to manufacture the electrode assembly E are supplied to a stacking device 120 through a non-illustrated magazine.

Aplurality of electrode assemblies E discharged through the stacking devices 120 are discharged to a supply line 110 oriented to the tab-welding unit 200 and directed to the tab-welding unit 200.

Accordingly, the electrode supply unit 100 discharges the electrode assemblies E through the stacking devices 120, and continues to supply the discharged electrode assemblies E to the tab-welding unit 200.

As illustrated in FIG. 2, the tab-welding unit 200 is disposed adjacently to an electrode assembly E supply line 110 of the electrode supply unit 100 and is connected to the electrode supply unit 100 in an In-Line manner of manufacturing.

The tab-welding unit 200 unifies a positive electrode and a negative electrode by welding, in a bundle, electrode tabs exposed from each of the positive electrode and the negative electrode of the electrode assemblies E supplied from the electrode supply unit 100, and connects electrode leads exposed to the outside to the electrode tabs of each of the positive electrode and the negative electrode.

In this case, a transfer box 300 is prepared on one side of the tab-welding unit 200 to transfer the welded electrode assemblies E to the packaging unit 400, and the electrode assemblies E discharged from the tab-welding unit 200 is sequentially settled into the transfer box 300 prepared through a non-illustrated robot arm.

The transfer box 300 will be described below.

The packaging unit 400 is a place in which the transfer box 300 having the electrode assemblies E settled therein is supplied from the tab-welding unit 200 and the electrode assemblies E are wrapped in an aluminum pouch, and as illustrated in FIG. 2, the packaging unit 400 is spaced apart from the tab-welding unit 200 by a predetermined distance and two packaging units are disposed with respect to a single tab welding unit 200.

In other words, the packaging unit 400 is disposed for the tab-welding unit 200 in a multiple form, and the packaging unit 400 serves to sequentially withdraw the electrode assemblies E from the transfer box 300 supplied from each packaging unit 400, insert the electrode assemblies E into the aluminum pouch, fill the aluminum pouch with an electrolyte to complete packaging, and transfer the aluminum pouch in a separate post-process.

In this embodiment, two packaging units 400 are illustrated as being disposed with respect to the tab-welding unit 200, but at least one or two or more packaging units may be disposed depending on the arrangement structure.

Here, two packaging units 400 are spaced apart from each other with respect to the tab-welding unit 200, for example, when one of the two packaging units 400 stops operating for a certain period of time to replace a pouch, an electrolyte, and various tool equipment, the transfer box 300 continuously discharged from the tab-welding unit 200 is supplied to the other packaging unit 400, which is to fundamentally prevent an operation of the secondary battery manufacturing facility 700 from being stopped.

Furthermore, since the pouch is packaged simultaneously in the two packaging units 400, the manufacturing productivity of the secondary battery is remarkably improved.

As described in FIG. 2, a temporary buffer 500 is disposed adjacently to one side of the tab-welding unit 200 at a right side of the drawing, that is, between the tab-welding unit 200 and a dedicated rail 610 of the transfer unit 600 described below, and the temporary buffer 500 is a place in which a plurality of transfer boxes 300 having the electrode assemblies E settled therein are loaded so as to be temporarily stored for a predetermined time.

In other words, when one of the packaging units 400 is stopped for a predetermined time while the tab-welding unit 200 is continuously driven, the temporary buffer 500 may temporarily load the transfer box 300 that has not been supplied to the stopped tab-welding unit 200.

Here, the temporary buffer 500 may be configured in multiple stages or may be expanded in multiple stages so that, when two or more packaging units 400 are disposed, the transfer box 300 maybe continuously loaded accordingly, and accordingly, the temporary waiting time of the transfer box 300 may be extended indefinitely.

The transfer unit 600 serves to selectively transfer the transfer box 300 discharged from the tab-welding unit 200 or the transfer box 300 loaded in the temporary buffer 500 to each packaging unit 400 according to the driving situation under control of a non-illustrated controller, and as illustrated in FIG. 2, the transfer unit 600 are disposed to be movable between the tab-welding unit 200 and the packaging unit 400 of the secondary battery manufacturing facilities 700 disposed in a parallel direction. In some embodiments of the present disclosure, the secondary battery manufacturing facilities 700 may be disposed parallel to each other.

In other words, for example, when the tab-welding unit 200 stops operating, the transfer unit 600 picks up the transfer box 300 loaded in the temporary buffer 500 and supplies the transfer box 300 to the packaging unit 400, and when any one packaging unit 400 stops operating, the transfer unit 600 picks up the transfer box 300 discharged from the tab-welding unit 200 and temporarily loads the transfer box 300 into the temporary buffer 500 or supplies the transfer box 300 to the other pending packaging unit 400 which is not stopped, thereby enabling the secondary battery to be continuously manufactured.

Furthermore, the transfer unit 600 is equipped with a bridge unit 630 described below, which may form a path L for passage of operators or equipment between the secondary battery manufacturing facilities 700 disposed in parallel, thereby ensuring smooth passage of the operators and equipment.

The transfer unit 600 includes a dedicated rail 610, a transfer member 620, and a bridge unit 630.

The dedicated rail 610 is disposed between the temporary buffer 500 adjacent to the tab-welding unit 200 and the packaging 400 along the three secondary battery manufacturing facilities 700 arranged in parallel as illustrated in Fig. 2, and the dedicated rails 610 are installed to be spaced from each other at a predetermined distance from the ground by a plurality of support legs 611 as illustrated in FIG. 3.

The transfer member 620 is interconnected to the tab-welding units 200, the temporary buffers 500, and the packaging units 400 through wired and wireless control, and configured to transfer the transfer box 300 of the tab-welding unit 200 or the temporary buffer 500 to a selected packaging unit 400 while moving along the dedicated rail 610, and one or more transfer member 620 may installed.

In other words, the transfer member 620 allows the transfer 300 to be transferred to a selected location under the control of the controller while exchanging wired and wireless signals with the tab-welding units 200, the temporary buffers 500, and the packaging units 400.

To this end, in the tab-welding units 200, the temporary buffers 500, and the packaging units 400, various cameras, lasers, and other detection sensors are disposed to detect the supply and discharge of the transfer box 300 or to count the number of transfer boxes 300 and electrode assemblies E disposed in the transfer boxes 300, although not illustrated, and these devices are wired or wirelessly connected to the controller.

Here, the transfer member 620 may be a robotic transfer vehicle (RTV), an unmanned robot transferring the transfer box 300 at high speed while reciprocating the dedicated rail 610.

On a bottom side of the transfer member 620, a plurality of driving wheels (not illustrated) driven by a motor to move along the dedicated rail 610 is provided, and on a top side thereof, a robot arm (not illustrated) for settling the transfer box 300 loaded with the electrode assemblies E on a top surface of the transfer member 620 or discharging the settled transfer box 300 is provided.

In the present embodiment, the transfer member 620 is described as moving along the rail, but various unmanned robots moving along the rail may be applied to the present embodiment.

The bridge unit 630 allows operators or various equipment supplied to the packaging unit 400 to pass while transferring the transfer box 300 through the transfer member 620 between the secondary battery manufacturing facilities disposed in a parallel direction, and is disposed between the respective secondary battery manufacturing facilities 700 on the dedicated rail 610.

In other words, the bridge unit 630 implements a path L for passage of operators or equipment below the dedicated rail 610 by ascending or descending the dedicated rail 610 between the respective secondary battery manufacturing facility 700.

To this end, the bridge unit 630 may include an elevating panel 640, an elevating lift 650 and a fixed lift 660 as illustrated in FIG. 4.

The elevating panel 640 maintains the same separated height on a horizontal line as the dedicated rail 610 disposed between the secondary battery manufacturing facilities while maintaining a shape of a plate having a certain area, and an elevating rail 641 connected to the dedicated rail 610 is provided in a top portion of the elevating panel 640.

A plurality of elevating lifts 650 are disposed in a proper place below the elevating panel 640 in a cylindrical or square shape having a predetermined length so as to support the elevating panel 640 to be spaced apart from the ground, and a cylindrical elevating boss 651 through which an elevating shaft 662 penetrates is disposed in an internal bottom end of the elevating lift 650.

The fixed lift 660 includes an accommodating body 661 configured to accommodate the elevating lift 650 in a shape corresponding to the elevating lift 650, an elevating shaft 662 spirally coupled to the elevating boss 651 of the elevating lift 650 and maintaining a penetrating state, and a driving motor 663 connected to the elevating shaft 662 to rotate the elevating shaft 662 in forward and reverse directions.

In other words, the fixed lift 660 implements a path L for passage of operators to a lower side of the elevating panel 640 by ascending the elevating boss 651 and the elevating lift 650 in an upward direction on the drawing as shown in a dotted line of FIG. 4 through the rotation of the elevating shaft 662 by the driving motor.

In this embodiment, the ascending and descending of the elevating lift 650 are described as being implemented by the elevating boss 651 and the elevating shaft 662, but it may also be implemented through various structures such as a belt and a pulley or a rack and a pinion.

On the other hand, the transfer box 300 for transferring the electrode assemblies E has a base B that maintains a shape of an approximate square in which side surfaces and a top surface thereof are open, as illustrated in FIGS. 5 to 10, and in the base B, a plurality of plate-shaped settling plates 320 having a predetermined area in which the electrode assemblies E are settled are disposed to be spaced apart from each other in a vertical direction.

Here, since the settling plate 320 may be provided in various numbers according to the productivity of the secondary battery and the surrounding environments, the number of settling plates 320 is not limited.

Meanwhile, the transfer box 300 is equipped with flow prevention unit 330 and 340 to prevent a movement of the electrode assemblies E during the movement of the transfer box 300 by pressing the electrode assemblies E settled on a plurality of settling plates 320. The flow prevention unit may be a component configured to prevent an unnecessary or improper movement of the electrode assemblies E.

The flow prevention unit 330 according to an embodiment of the present disclosure includes a pair of fixing poles 331, a pair of elevating links 332, and a moving block 334, as illustrated in FIGS. 5 to 7.

The fixing pole 331 is fixed to the base B while maintaining a predetermined length as a pair, and a pair of fixing poles 331 are disposed on both sides of the settling plates 320, respectively, and support the settling plates 320 to be raised or lowered in a longitudinal direction.

In this case, each settling plate 320 is supported by being connected to the fixing pole 331 through an L/M guide so that the settling plates 320 can move up and down along the fixing pole 331.

The elevating links 332 are formed in a pair, and are disposed adjacently to the outside of the fixing poles 331, respectively.

The elevating link 332 is connected to both ends of each settling plate 320 through a plurality of rotating bars 333 having a predetermined length in which a center in the longitudinal direction of a shape of an "X" are coupled to a rotating pin P and overlapped to be rotatable.

In this case, as illustrated in FIGS. 6 and 7, a left end (in a top direction) of each rotating bar 3333 on the drawing is rotatably installed on a left end of each settling plate 320 arranged vertically on the drawing through the rotating pin P, and a right end (in a bottom direction) of each rotating bar 333 on the drawing is rotatably installed on a right end of each settling plate 320 arranged vertically on the drawing through the rotating pin P.

Accordingly, the elevating link 332 supports the settling plate 320 in which a plurality of 'X'-shaped rotating bars 333 are disposed vertically upward and downward so that the settling plate 320 can rotate diagonally, thus performing up and down movements of the plurality of settling plates 320 through the rotation of the elevating link 332.

In this case, a guide rail L/M may be disposed between a left end of each rotating bar 333 on the drawing and the settling plate 320 so that, when the rotating bar 333 of the elevating link 332 rotates according to a horizontal movement of the moving block 334 described below, the settling plate 320 may be raised or lowered along an elevating platform.

In other words, a left end of the rotating bar 333 on the drawing is rotatably installed on the guide rail L/M, and here, the guide rail L/M may be a general L/M guide.

In this embodiment, the guide rail L/M is illustrated as being installed on the left end of the rotating bar 333 on the drawing, but a structure thereof is not limited because guide rails L/M may be installed on both ends of the rotating bar 333.

In a state in which the moving block 334 is connected to the left end of the rotating bar 333 disposed in the vertical direction through the rotating pin P, the moving block 334 is disposed on a lower bottom surface of the base B to be movable in the horizontal direction through the guide rail L/M.

In this case, the moving block 334 is equipped with a spiral rotating shaft 335 to allow for horizontal movements, and the rotating shaft 335 moves forward and backward horizontally on a bottom surface of the base B by forward and backward rotation.

In other words, the moving block 334 rotates the rotating bar 333 connected while moving horizontally by the rotation of the rotating shaft 335, and in the process of rotating the rotating bar 333, the moving block 334 moves horizontally along the guide rail L/M between the settling plate 320 and the rotating bar 333, so that the settling plate 320 is ascended to form a separated space between each seating plate 320 and, the electrode assemblies E may move into this space and may be settled on the seating plate 320.

In FIGS. 8 to 10, another embodiment of a flowprevention unit 340 is illustrated.

The flow prevention unit 340 according to another embodiment of the present disclosure includes a pressing plate 341, an elevating support stand 342, an elastic member 343 and a pushing rod 346.

A plurality of plate-shaped settling plates 320 having a predetermined area in which the electrode assemblies E are settled are arranged vertically inside the base B, and a plate-shaped pressing plate 341 having a predetermined area that ascends or descends toward the settling plate 320 is disposed on a top portion of each settling plate 320 on the drawing.

That is, the pressing plate 341 and the settling plate 320 are sequentially arranged.

A plurality of elevating support stands 342 are fixed to the base B while maintaining a predetermined length, and are disposed on both sides of the pressing plate 341 to support the pressing plates 341 to be ascended or descended.

In this case, the pressing plate 341 is supported by being connected to the elevating support stand 342 through a guide rail L/M so that the pressing plate 341 may move up and down along the elevating support 342.

The elastic member 343 forms the pressing plate 341 and the settling plate 320 in a group, and serves to connect the pressing plate 341 and the settling plate 320 to each other so as to be elastically supported.

In this case, the elastic members 343 are disposed on both sides of the pressing plate 341 and the settling plate 320 oriented to a plurality of elevating support stands 342, and a locking ring 345 for fixing the elastic member 343 is formed at each end of the pressing plate 341 and the settling plate 320.

Here, the elastic member 343 may be a tensile spring that is tensioned to maintain elasticity when the pressing plate 341 moves upwardly on the drawing due to an ascent of a pushing rod 346 described below, and that is returned by restoring force when the pushing rod 346 descends.

In this embodiment, the elastic member 343 is illustrated as a tensile spring, but the present disclosure is not limited thereto, and the elastic member 343 may be implemented through various elastic means.

The pushing rods 346 are disposed on both sides of the pressing plate 341 while maintaining a predetermined length and are configured to be raised or lowered, and may be connected to each pressing plate 341 through a fixing bolt, a connection key, and welding.

In other words, as illustrated in FIG. 9, the pushing rod 346 simultaneously ascends the plurality of pressing plates 341 connected to the pushing rod 346 during the ascending, thus forming a space separated between the settling plates 320 formed in a group.

In other words, by separating a space between the pressing plate 341 and the settling plate 320, the electrode assemblies E are allowed to move into the separated space and settle on the settling plate 320.

The pushing rod 346 is pressed upwardly on the drawing by an operation of a pushing cylinder after the transfer box 300 is supplied to the packaging unit 400.

In the present embodiment, the electrode assembly is illustrated as being supported in the transfer box by the flow prevention unit, but the structure of the flow prevention unit is not limited as it may be supported through various structures .

Hereinafter, a manufacturing process of a secondary battery using a secondary battery manufacturing system according to the present disclosure will be described below with reference to the accompanying drawings.

Prior to the description, a transfer box for transferring an electrode assembly will be described as a transfer box presented as an embodiment.

First, an operator supplies a magazine on which battery cells are loaded to each stacking device 120 of an electrode supply unit 100.

In each stacking device 120, the supplied battery cells and a separating film are sequentially stacked by a set number of battery cells and separating films to complete an electrode assembly E, and the electrode assembly E is discharged to the supply line 110.

The electrode assembly E discharged from each stacking device 120 is supplied to a tab-welding unit 200 by a supply line 110.

In the tab-welding unit 200, each electrode tab exposed from respective positive electrodes and negative electrodes of the electrode assemblies E supplied from the stacking device 120 of the electrode supply unit 100 is welded in a bundle, and electrode leads are connected to each of the electrode tabs.

Thereafter, the welded electrode assemblies E are sequentially settled in the transfer box 300 disposed at an adjacent position for transfer.

In this case, the settling plates 320 of the transfer box 300 are spaced apart from each other at predetermined intervals as illustrated in FIG. 6.

In other words, as the rotating shaft 335 rotates by the rotation of a combined driving shaft 337 as illustrated in FIG. 6, the moving block 334 moves horizontally to the right on the drawing, and accordingly, a plurality of rotating bars 333 are unfolded in conjunction, and the settling plates 320 are simultaneously pushed upwardly on the drawing to separate the seating plates 320 from each other.

When the separation of the settling plates 320 is completed, the electrode assemblies E, which have been welded, are picked up by a robot arm not illustrated, are moved into a separated space of the settling plate 320 as illustrated in FIG. 6, and are settled on the settling plate 320.

Thereafter, when the electrode assemblies E are completely settled in the transfer box 300, the driving shaft 337 assigns reverse rotation to rotate the rotating shaft 335 in reverse, as illustrated in FIG. 7.

In this case, the moving block 334 returns the rotating bars 333, which were unfolded in moving to the left on the drawing, to an original position thereof, and pulls down the settling plates 320 in a downward direction on the drawing, thereby bringing the settling plates 320 into close contact with each other.

In this process, the electrode assemblies E settled on the settling plate 320 are disposed on a top side, and receives a predetermined pressure by a descending settling plate 320, thereby preventing a movement of the electrode assemblies E on the settling plate 320.

When the electrode assemblies E are completely settled, a transfer member 620 moves to one side of a temporary buffer 500 along a dedicated rail 610 under the control of a controller, as illustrated in FIG. 2.

Furthermore, the transfer member 620 picks up the transfer box 300 of the tab-welding unit 200 through a separate pickup means (not illustrated), and in this case, the transfer member 620 moves along the dedicated rail 610 and simultaneously moves to a selected packaging unit 400 that requires the supply of the electrode assemblies E under the control of the controller.

The transfer member 620 reaching the selected packaging unit 400 supplies the transfer box 300 to the packaging unit 400, and heads to the tab-welding unit 200 along the dedicated rail 610 under the control of the controller so as to pick up the transfer box 300.

The packaging unit 400 receiving the transfer box 300 sequentially withdraws the electrode assemblies E of the transfer box 300, inserts the electrode assemblies E into a prepared aluminum pouch, and fills the pouch with an electrolyte to complete packaging.

Thereafter, the pouch in which the electrode assemblies E are embedded is transferred for a separate post-process.

On the other hand, when any one of the packaging units 400 of a single secondary battery manufacturing facility 700 stops operating for a predetermined time, the transfer member 620 picks up the transfer box 300 discharged from the tab-welding unit 200 under the control of the controller and supplies the transfer box 300 to the other packaging unit 400.

If the supply of the transfer box 300) to the driving packaging unit 400 is saturated, the transfer member 620 may temporarily load the transfer box 300 into the temporary buffer 500.

Furthermore, when the operation of the two packaging units 400 is stopped, the transfer member 620 may load the transfer box 300 into the temporary buffer 500, or supply the transfer box 300 to a packaging unit 400 or the temporary buffer 500 of another adjacent secondary battery manufacturing facility 700 along the dedicated rail 610.

On the other hand, when the tab-welding unit 200 of the single secondary battery manufacturing facility 700 stops operating for a predetermined time, in a state in which the discharge of the transfer box 300 to the tab-welding unit 200 is stopped, the transfer member 620 may pick up the transfer box 300 loaded into the temporary buffer 500 and supply transfer box 300 to each packaging unit 400 under the control of the controller.

Furthermore, the transfer box 300 through the temporary buffer 500 may be supplied to a packaging unit 400 on a single line, or may be supplied to a packaging unit 400 of another secondary battery manufacturing facility 700 that requires the supply of the transfer box 300.

In other words, even if the tab-welding unit 200 or the packaging unit 400 stops operating at any secondary battery manufacturing facility 700, the supply of the transfer box 300 may be continuously performed, thereby improving manufacturing productivity of the secondary battery.

On the other hand, when the operator desires to pass between the secondary battery manufacturing facilities 700 arranged in parallel to replace the pouch, the electrolyte, and various tool equipment of the packaging unit 400, the bridge unit 630 operates to form a path L for the operator's passage.

First, when the elevating shaft 662 is rotated by the driving motor 663 as illustrated in FIG. 4, the elevating boss 651 and the elevating lift 650 are accompanied to ascend upwardly on the drawing.

In this process, the elevating panel 640 supported by the elevating lift 650 ascends like a dotted line of FIG. 4, thus forming the path L for the passage of operators and equipment below the elevating panel 640.

Thereafter, when the elevating shaft 662 rotates in reverse, the elevating lift 650 and the elevating panel 640 that have ascended return to initial positions thereof.

The transfer member 620 equipped with the transfer box 300 may be disposed on the elevating panel 640 that has ascended upward according to the formation of the path L, and the transfer member 620 may pause or move on the elevating rail 641.

As described so far, in the secondary battery manufacturing system having a multi-packaging unit of the present disclosure, the packaging unit is disposed in the Multi-Line method rather than the In-Line manner of manufacturing in the configuration of the secondary battery manufacturing facility, and there is provided the temporary buffer in which the transfer box having the electrode assemblies settled therein is temporarily loaded. The transfer box discharged from the tab-welding unit or the transfer box loaded into the temporary buffer is transferred to each packaging unit by the transfer unit, and when the tab-welding unit stops operating, the transfer unit picks up the transfer box of the temporary buffer and supplies the transfer box to each packaging unit, and when the packaging unit stops operating, the transfer unit picks up the transfer box discharged from the tab-welding unit and loads the transfer box into the temporary buffer, thereby continuously supplying or discharging the electrode assemblies and significantly increasing the manufacturing productivity of the secondary battery.

Furthermore, the safety of passage of the operators and equipment may be secured by allowing the operators or equipment to pass through the bridge unit even during the transfer of the transfer box between the arranged secondary battery manufacturing facilities.

Furthermore, the flow prevention unit prevents the movement of the electrode assemblies settled in the transfer box, thereby ensuring the safety of the electrode assemblies from impacts or vibrations applied from an external source during the transfer.

## Claims

1. A secondary battery manufacturing system having a multi-packaging unit, having a plurality of secondary battery manufacturing facilities, wherein the secondary battery manufacturing system comprises:
an electrode supply unit equipped with a plurality of stacking devices for supplying an electrode assembly in which a plurality of battery cells are stacked;
a tab-welding unit disposed adjacently to the electrode supply unit, and configured to weld the electrode tab exposed from the electrode assembly with a bundle and connect an electrode lead to settle the electrode assembly in a transfer box;
at least one packaging unit spaced apart from the tab-welding unit and configured to receive the transfer box from the tab-welding unit to insert the electrode assembly into an aluminum pouch;
at least one temporary buffer disposed adjacently to the tab-welding unit and in which the transfer box is temporarily loaded when the packaging unit stops operating; and
a transfer unit disposed between the tab-welding unit and the packaging unit in an arrangement direction of the secondary battery manufacturing facilities, and configured to selectively transfer the transfer box of the tab-welding unit or the temporary buffer to a plurality of packaging units under control of a controller, and configured to implement a path for a passage.

2. The secondary battery manufacturing system having a multi-packaging unit of claim 1, wherein the transfer unit is configured to,
pick up the transfer box loaded into the temporary buffer when the tab-welding unit stops operating and supply the transfer box to the packaging unit, and
pick up the transfer box discharged from the tab-welding unit when the packaging unit stops operating and load the transfer box in the temporary buffer, or supply the transfer box to another non-stopping packaging unit.

3. The secondary battery manufacturing system having a multi-packaging unit of claim 1 or 2, wherein the transfer unit comprises:
a dedicated rail spaced apart from a ground and disposed between the tab-welding unit and the packaging unit in the arrangement direction of the secondary battery manufacturing facilities;
at least one transfer member interconnected to the tab-welding units, the temporary buffers and the packaging units through wired and wireless control and configured to transfer the transfer box of the tab-welding unit or the temporary buffer to a selected packaging unit while moving along the dedicated rail; and
a bridge unit disposed between each secondary battery manufacturing facility on the dedicated rail and configured to implement a path for an operator's passage below the dedicated rail by ascending and descending.

4. The secondary battery manufacturing system having a multi-packaging unit of claim 3, wherein the bridge unit comprises:
an elevating panel equipped with an elevating rail along which the transfer member moves;
a plurality of elevating lifts configured to support the elevating panel and including an elevating boss therein; and
a fixed lift including an accommodating body configured to accommodate the elevating lift therein, an elevating shaft penetrating through the elevating boss by spiral coupling, and a driving motor configured to rotate the elevating, shaft so that the elevating lift ascends or descends by raising or lowering the elevating boss by the rotation of the elevating shaft.

5. The secondary battery manufacturing system having a multi-packaging unit of anyone of the preceding claims, wherein a plurality of secondary battery manufacturing facilities are disposed in a parallel direction.

6. The secondary battery manufacturing system having a multi-packaging unit of anyone of the preceding claims, wherein in the transfer box, a plurality of settling plates on which the electrode assembly is accommodated are disposed to be spaced apart from each other in a vertical direction, and the transfer box is provided with a flow prevention unit for preventing movements by pressing the electrode assembly settled on the settling plates.

7. The secondary battery manufacturing system having a multi-packaging unit of claim 6, wherein the flow prevention unit comprises:
a fixing pole disposed on both sides of the settling plates and configured to support the settling plates to be raised or lowered;
an elevating link in which a plurality of rotating bars rotatably overlapped in the form of an 'X' are disposed adjacently to a pair of fixing poles, wherein one side of each rotating bar is installed in one side end of each setting plate through a rotating pin, and the other side of each rotating bar is installed in the other side end of each settling plate through the rotating pin; and
a moving block connected to an end of the rotating bar disposed on a bottom side in a vertical direction through the rotating pin, and configured to separate the settling plates from each other by rotating the rotating bar while moving horizontally by a rotation of a rotating shaft and ascending or descending the settling plates at the same time.

8. The secondary battery manufacturing system having a multi-packaging unit of claim 7, wherein a guide rail is disposed between one side of the rotating bar and an end of the settling plate so as to raise or lower the settling plate when the rotating bar rotates according to a movement of the moving block.

9. The secondary battery manufacturing system having a multi-packaging unit of anyone of claims 6 to 8, wherein the flow prevention unit comprises:
a plurality of pressing plates disposed above each settling plate on which the electrode assembly is accommodated, and configured to be raised or lowered toward the settling plate;
an elevating support stand disposed on both sides of the pressing plate and configured to support the pressing plates to be raised or lowered;
an elastic member configured to connect the pressing plate and the settling plate to be elastically supported by each other so that the pressing plate and the settling plate is formed in a group; and
a pushing rod having a predetermined length for separating the settling plates formed in a group, by simultaneously ascending or descending the pressing plates while being connected to each of the pressing plates.
